# EUROPÄISCHE PATENTSCHRIFT

(11) **EP 1 459 820 B1**
(45) Veröffentlichungstag und Bekanntmachung des Hinweises auf die Patenterteilung: **23.05.2007**
(21) Anmeldenummer: 03005460.5
(22) Anmeldetag: 15.03.2003
(51) Int. Cl.: B21D 53/24, F16B 5/02, B21K 1/56

(54) **Verfahren und maschinelle Anordnung zur Erstellung eines Gewindevorsprungs an einem plattenartigen Werkstück, insbesondere an einem Blech**
Method and machine arrangement for producing a threaded projection on a flat workpiece, in particular on a metal sheet
Procédé et agencement de machine pour produire une protubérance filetée dans un élément en forme de plaque, en particulier dans une tôle

(43) Veröffentlichungstag der Anmeldung: 22.09.2004
(73) Patentinhaber: TRUMPF Werkzeugmaschinen GmbH + Co. KG, 71254 Ditzingen (DE)
(72) Erfinder: Büttner, Stefan, 71706 Markgröningen (DE); Tanch, Michael, 71229 Leonberg (DE); Müller-Hirsch, Thomas, 75397 Simmozheim (DE); Döttling, Jürgen, 71254 Ditzingen (DE); Hammann, Gerhard, 70825 Korntal-Münchingen (DE)
(74) Vertreter: Kohler Schmid Möbus

(56) Entgegenhaltungen:
- DE-U- 20 018 936
- US-A- 2 983 179
- US-A- 5 062 289
- PATENT ABSTRACTS OF JAPAN vol. 009, no. 057 (M-363), 13. März 1985 (1985-03-13) & JP 59 191536 A (MATSUSHITA ELECTRIC IND CO LTD), 30. Oktober 1984 (1984-10-30)

## Beschreibung

Die Erfindung betrifft ein Verfahren zur Erstellung eines an einem plattenartigen Werkstück, insbesondere an einem Blech, unter einem Winkel gegenüber der Werkstückhauptebene verlaufenden Gewindevorsprungs, wobei an dem Werkstück als Gewindevorsprung eine sich mit einseitiger Verbindung an das Restwerkstück anschließende, an wenigstens einer von der Verbindung mit dem Restwerkstück ausgehenden Seite mit einer Gewindekontur versehene und zumindest mit einem wenigstens eine Gewindekontur aufweisenden Teil gegenüber der Werkstückhauptebene bleibend unter dem Winkel gebogene Werkstücklasche erstellt wird. Die Erfindung betrifft des Weiteren eine maschinelle Anordnung zur Durchführung des genannten Verfahrens, umfassend eine Schneidvorrichtung zum Freischneiden von Werkstücklaschen, eine Gewindeschneidvorrichtung sowie eine Biegevorrichtung, wobei mittels der Schneidvorrichtung zum Freischneiden von Werkstücklaschen an dem Werkstück eine Werkstücklasche mit einseitiger Verbindung mit dem Restwerkstück freischneidbar und mittels der Gewindeschneidvorrichtung an wenigstens einer von der Verbindung mit dem Restwerkstück ausgehenden Seite der Werkstücklasche eine Gewindekontur erstellbar ist und wobei mittels der Biegevorrichtung die Werkstücklasche zumindest mit einem Teil gegenüber der Werkstückhauptebene bleibend unter dem Winkel biegbar ist.

Gattungsgemäßen Stand der Technik betrifft die US 2,983,179 A. Im Falle dieses Standes der Technik werden an einem Blech zunächst zwei ausgehend von dem Blechrand parallel zueinander in Richtung auf das Blechinnere verlaufende Schlitze erstellt. Die dadurch freigeschnittene Blechzunge wird anschließend aufgefaltet. Dabei ergibt sich eine Falte mit senkrecht zu der Hauptebene des bearbeiteten Blechs verlaufenden und eng aneinanderliegenden Faltenschenkeln. Die einander gegenüberliegenden Stirnseiten der Faltenschenkel werden schließlich jeweils durch Aufpressen einer entsprechenden Form mit einer Gewindekontur versehen. Die Gewindekonturen an den einander gegenüberliegenden Stirnseiten der Faltenschenkel bilden Segmente eines Schraubengewindes und gestatten das Aufdrehen einer Schraubenmutter.

Eine Optimierung des vorbekannten Verfahrensablaufes sowie die Bereitstellung von Vorrichtungen zur Durchführung des ablaufoptimierten Verfahrens hat sich die vorliegende Erfindung zum Ziel gesetzt.

Erfindungsgemäß gelöst wird die verfahrensbezogene Aufgabe durch das Verfahren gemäß Patentanspruch 1, die vorrichtungsbezogene Aufgabe durch die maschinelle Anordnung gemäß Patentanspruch 8.

Im Falle der Erfindung werden demnach die Gewindekonturen der als Gewindevorsprünge dienenden Werkstücklaschen in der Werkstückhauptebene erstellt. Das Biegen der Gewindevorsprünge aus der Werkstückhauptebene erfolgt erst in einem anschließenden Verfahrensschritt. Daraus resultiert eine verfahrensmäßige sowie eine vorrichtungsbezogene Optimierung insofern, als in den vorausgehenden Verfahrensabschnitten eine Behinderung des Verfahrensablaufes durch aus der Werkstückhauptebene vorragende Werkstücklaschen ausgeschlossen und konstruktive Maßnahmen zur Gewährleistung eines störungsfreien Verfahrensablaufs ungeachtet aus der Werkstückhauptebene vorragender Werkstücklaschen verzichtbar sind.

Besondere Ausführungsarten des erfindungsgemäßen Verfahrens nach Patentanspruch 1 sind in den abhängigen Patentansprüchen 2 bis 7 beschrieben; besondere Ausführungsarten der erfindungsgemäßen maschinellen Anordnung nach Patentanspruch 8 ergeben sich aus den abhängigen Patentansprüchen 9 bis 15.

Ausweislich der Patentansprüche 2 und 9 besteht in bevorzugter Weiterbildung der Erfindung die Möglichkeit, an dem Werkstück in der Werkstückhauptebene zwei in Querrichtung voneinander beabstandete Schnitte mit dem Schnittverlauf einer Gewindekontur zu erstellen. Mit einem geringen zeitlichen und einem geringen konstruktiven Aufwand lässt sich auf diese Art und Weise ein Gewindevorsprung mit zwei einander gegenüberliegenden Gewindesegmenten fertigen. Die Gewindesegmente beidseits der Werkstücklasche sind jedenfalls als Innengewindesegmente zum Eingriff in Außengewinde zweier verschiedener Bauteile verwendbar. Weisen die Gewindekonturen beidseits der Werkstücklasche einen gegenseitigen Versatz zur Erzeugung einer Gewindesteigung auf (Patentansprüche 3 und 10), so können die beiden Gewindesegmente als Außengewindesegmente gemeinschaftlich und damit besonders wirksam in ein Innengewinde an einem auf den Gewindevorsprung aufzuschraubenden Bauteil eingreifen.

Die Patentansprüche 4 bis 6 betreffen Varianten des erfindungsgemäßen Verfahrens, die sich durch bewährte und funktionssichere Verfahrensmaßnahmen zum Erstellen wenigstens einer Gewindekontur an der Werkstücklasche bzw. zum Biegen der Werkstücklasche aus der Werkstückhauptebene auszeichnen. Entsprechende Vorteile weisen die in den Patentansprüchen 11 bis 13 beschriebenen Bauarten der erfindungsgemäßen maschinellen Anordnung auf.

Im Sinne der Erfindung maßgebend ist, dass die Gewindekonturen des Gewindevorsprungs in der Werkstückhauptebene erstellt werden. Dabei ist es denkbar, dass an dem Werkstück zunächst eine Werkstücklasche freigeschnitten und diese dann in einem separaten Arbeitsgang mit wenigstens einer Gewindekontur versehen wird. In bevorzugter Ausgestaltung der Erfindung ist vorgesehen, dass mit der Erstellung eines Schnittes mit dem Schnittverlauf einer Gewindekontur gleichzeitig die Werkstücklasche teilweise freigeschnitten wird (Patentansprüche 7, 14). Das Freischneiden der Werkstücklasche an dem Werkstück und die Erstellung einer Gewindekontur an wenigstens einer von der Verbindung mit dem Restwerkstück ausgehenden Seite der Werkstücklasche sind demnach parallelisiert. Es ergeben sich folglich ein zeitlich optimierter Verfahrensablauf sowie eine unter konstruktiven Gesichtspunkten optimierte maschinelle Anordnung.

Patentanspruch 15 schließlich hat eine Ausführungsform der erfindungsgemäßen maschinellen Anordnung zum Gegenstand, die eine weitgehend automatisierte Erstellung von Gewindevorsprüngen an plattenartigen Werkstücken gestattet.

Nachstehend wird die Erfindung anhand beispielhafter schematischer Darstellungen näher erläutert. Es zeigen:
- Fign. 1 bis 3: schematisierte Darstellungen zur Veranschaulichung des Ablaufs eines Verfahrens zur Erstellung eines Gewindevorsprungs an einem Blech und
- Fig. 4: eine maschinelle Anordnung zur Durchführung des in den Figuren 1 bis 3 skizzierten Verfahrens.

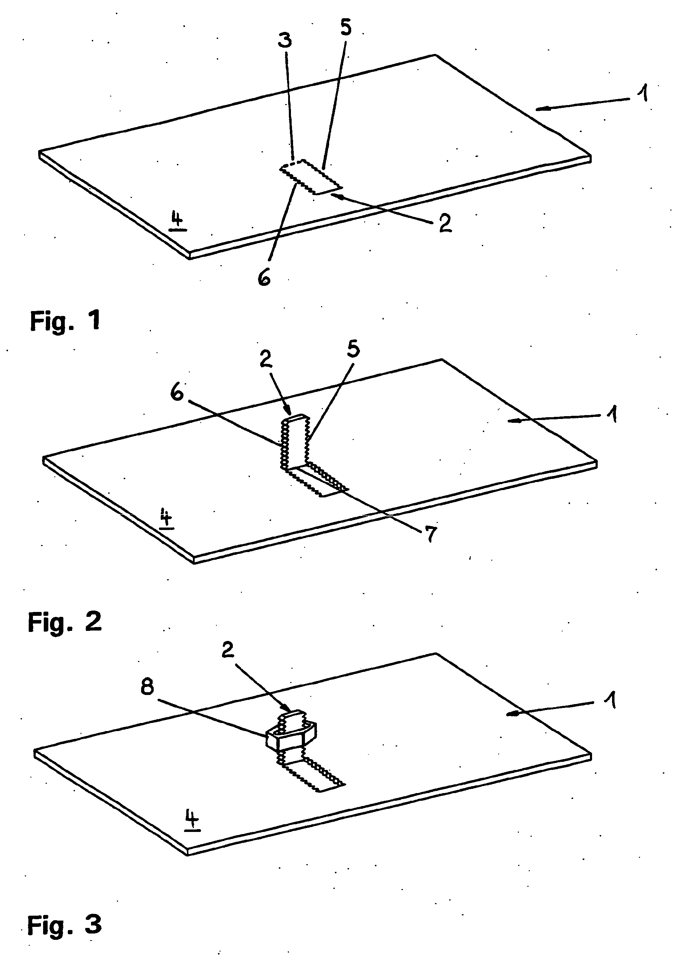

Gemäß Figur 1 wird im Laufe des veranschaulichten Verfahrens zunächst an einem Blech 1 eine Werkstücklasche 2 freigeschnitten. Die Werkstücklasche 2 bleibt dabei in der Hauptebene des Bleches 1 angeordnet und an einem in Figur 1 gestrichelt angedeuteten und eine einseitige Verbindung bildenden Laschenansatz 3 mit einem Restwerkstück 4 verbunden. Der Freischnitt der Werkstücklasche 2 erfolgt an den von dem Laschenansatz 3 ausgehenden Längsseiten der Werkstücklasche 2 unter Erstellung von Gewindekonturen 5, 6. Die Gewindekonturen 5, 6 sind gleichartig und besitzen in dem gezeigten Beispielsfall ein herkömmliches metrisches Gewindeprofil. In Richtung der Längsseiten der Werkstücklasche 2 sind die Gewindekonturen 5, 6 mit einem eine Gewindesteigung erzeugenden gegenseitigen Versatz angeordnet. Gedachte Verbindungslinien der Zahnspitzen der Gewindekonturen 5, 6 verlaufen ebenso parallel zueinander wie gedachte Verbindungslinien der Zahnlückenspitzen. An der dem Laschenansatz 3 gegenüberliegenden Seite ist die Werkstücklasche 2 mit einem geradlinigen Schnitt von dem Restwerkstück 4 getrennt.

Ausweislich Figur 2 wird die Werkstücklasche 2 im Anschluss an ihren Freischnitt und die Erstellung der Gewindekonturen 5, 6 bleibend unter einem Winkel, im vorliegenden Fall unter einem rechten Winkel, gegenüber der Hauptebene des Bleches 1 gebogen. Eine Biegelinie 7 der Biegung fällt mit dem Laschenansatz 3 der Werkstücklasche 2 an dem Restwerkstück 4 zusammen. Die aus der Hauptebene des Bleches 1 herausgebogene Werkstücklasche 2 bildet einen Gewindevorsprung mit einem metrischen Außengewinde, das seinerseits mit den Gewindekonturen 5, 6 zwei Gewindesegmente umfasst.

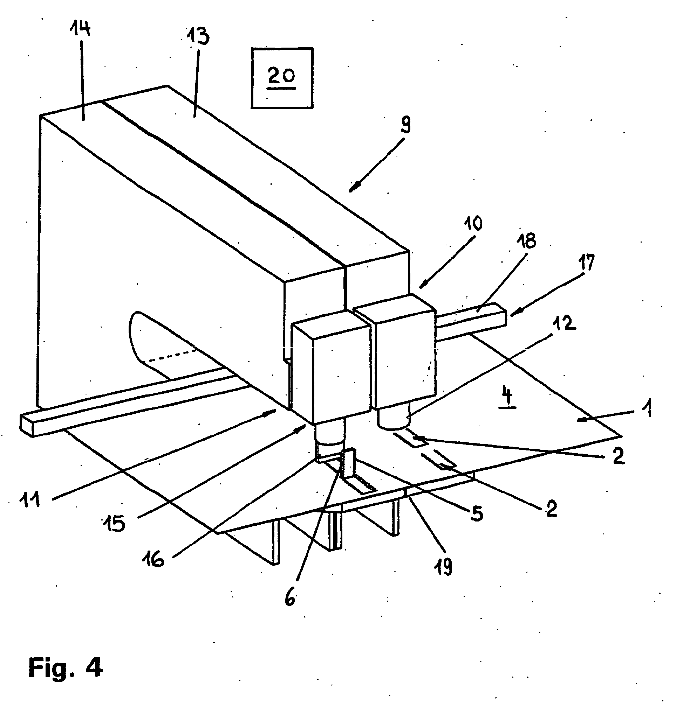

Auf die Werkstücklasche 2 bzw. den von dieser gebildeten Gewindevorsprung lassen sich Bauteile mit entsprechendem Innengewinde aufdrehen. In Figur 3 ist als derartiges Bauteil beispielhaft eine Mutter 8 gezeigt.

Eine maschinelle Anordnung 9 zur Durchführung des beschriebenen Verfahrens ist Figur 4 zu entnehmen.

Demnach umfasst die maschinelle Anordnung 9 eine Schneidstation 10 sowie eine Biegestation 11. Die Schneidstation 10 weist eine herkömmliche Laserschneidvorrichtung 12 auf, die ihrerseits an einem ersten Maschinengestell 13 angebracht ist. Die Laserschneidvorrichtung 12 dient gleichzeitig als Vorrichtung zum Freischneiden von Werkstücklaschen 2 und als Gewindeschneidvorrichtung.

Mit dem ersten Maschinengestell 13 verbunden ist ein diesem unmittelbar benachbartes zweites Maschinengestell 14. Letzteres lagert eine herkömmliche Biegevorrichtung 15 der Biegestation 11. In Figur 4 erkennbar ist ein das Blech 1 an dessen Oberseite beaufschlagender Niederhalter 16, der mit einer unterhalb des Bleches 1 angeordneten und in Figur 4 verdeckten Biegewange zusammenwirkt. Der Niederhalter 16 und die Biegewange sind Teil eines Schwenkbiegewerkzeuges üblicher Bauart.

Anstelle zweier separater Maschinengestelle 13, 14 kann auch ein einheitliches Maschinengestell vorgesehen sein. Wird zum Freischneiden von Werkstücklaschen 2 und/oder zum Einschneiden von Gewindekonturen 5, 6 in das Blech 1 statt der Laserschneidvorrichtung 12 ein Stanzwerkzeug verwendet, so kann eine einzige Bearbeitungsstation ausreichen. In die Werkzeugaufnahmen dieser Bearbeitungsstation sind dann nacheinander Stanz- und Biegewerkzeuge einzuwechseln. Auch denkbar ist die Verwendung sowohl einer Stanz- als auch einer thermischen Schneidvorrichtung zum Erstellen von mit wenigstens einer Gewindekontur 5, 6 versehenen Werkstücklaschen 2. In diesem Fall besteht unter anderem die Möglichkeit, zunächst mittels der Stanzvorrichtung in der Werkstückhauptebene eine Werkstücklasche 2 mit ausschließlich geradlinigen Begrenzungen freizuschneiden und danach an den von der Verbindung 3 mit dem Restwerkstück 4 ausgehenden Seiten der Werkstücklasche 2 mittels der thermischen Schneidvorrichtung zumindest eine Gewindekontur 5, 6 zu erstellen.

In dem Rachen der C-förmigen Maschinengestelle 13, 14 ist als Werkstücktransfervorrichtung eine herkömmliche Koordinatenführung 17 untergebracht. An einer Querschiene 18 der Koordinatenführung 17 ist das Blech 1 mittels nicht im Einzelnen gezeigter Spannpratzen festgelegt. Im Übrigen ruht das Blech 1 auf einem Werkstücktisch 19, der an den Maschinengestellen 13, 14 angebracht ist. Mittels der Koordinatenführung 17 ist das Blech 1 in seiner horizontalen Hauptebene beliebig bewegbar.

Zum Freischneiden von Werkstücklaschen 2 und zum gleichzeitigen Erstellen von Gewindekonturen 5, 6 wird das Blech 1 mittels der Koordinatenführung 17 gegenüber der stationären Laserschneidvorrichtung 12 bewegt. Diese Bewegung erfolgt derart, dass die Werkstücklaschen 2 entsprechend den zu Figur 1 erläuterten Abläufen mit einem einseitigen Laschenansatz 3, gegeneinander versetzten Gewindekonturen 5, 6 an den Längsseiten und einem geradlinigen Schnitt an der dem Laschenansatz 3 gegenüberliegenden Querseite von dem Restwerkstück 4 getrennt werden. Anschließend wird das Blech 1 mittels der Koordinatenführung 17 gegenüber der Biegevorrichtung 15 der Biegestation 11 nacheinander mit sämtlichen in der Hauptebene des Bleches 1 angeordneten Werkstücklaschen 2 derart positioniert, dass sich bei Betätigung der Biegevorrichtung 15 Biegungen der Werkstücklaschen 2 mit einer Biegelinie ergeben, die mit dem Laschenansatz 3 der jeweiligen Werkstücklasche 2 zusammenfällt. Abweichend von den dargestellten Verhältnissen besteht die Möglichkeit, die mit den Gewindekonturen 5, 6 der Werkstücklasche 2 an dem Restwerkstück 4 erstellten Verzahnungen zu entfernen. Eine derartige Begradigung der betreffenden Begrenzungen des Ausschnittes an dem Restwerkstück 4 kann mittels der Laserschneidvorrichtung 12 in einem separaten Arbeitsschritt erfolgen.

In Figur 4 ist eine Werkstücklasche 2 entsprechend Figur 2 unter einem rechten Winkel gegenüber der Hauptebene des Bleches 1 gebogen. Diese Werkstücklasche 2 bildet einen Gewindevorsprung mit Außengewinde, der, wie zu Figur 3 beschrieben, als "Schraubenbolzen" für ein aufzudrehendes Bauteil dienen kann.

Gesteuert werden sämtliche Funktionen der maschinellen Anordnung 9, insbesondere die Relativbewegung des Bleches 1 gegenüber der Laserschneidvorrichtung 12 und der Biegevorrichtung 15, mittels einer in Figur 4 angedeuteten CNC-Steuerung 20.

## Patentansprüche

1. Verfahren zur Erstellung eines an einem plattenartigen Werkstück, insbesondere an einem Blech (1) unter einem Winkel gegenüber der Werkstückhauptebene verlaufenden Gewindevorsprungs, wobei an dem Werkstück als Gewindevorsprung eine sich mit einseitiger Verbindung (3) an das Restwerkstück (4) anschließende, an wenigstens einer von der Verbindung (3) mit dem Restwerkstück (4) ausgehenden Seite mit einer Gewindekontur (5, 6) versehene und zumindest mit einem wenigstens eine Gewindekontur (5, 6) aufweisenden Teil gegenüber der Werkstückhauptebene bleibend unter dem Winkel gebogene Werkstücklasche (2) erstellt wird, **dadurch gekennzeichnet, dass** eine Gewindekontur (5, 6) an wenigstens einer von der Verbindung (3) mit dem Restwerkstück (4) ausgehenden Seite der Werkstücklasche (2) erstellt wird, indem an dem Werkstück in der Werkstückhauptebene zumindest ein Schnitt mit dem Schnittverlauf einer Gewindekontur (5, 6) erstellt wird und dass die an wenigstens einer von der Verbindung (3) mit dem Restwerkstück (4) ausgehenden Seite mit einer Gewindekontur (5, 6) versehene Werkstücklasche (2) zumindest mit einem wenigstens eine Gewindekontur (5, 6) aufweisenden Teil als Gewindevorsprung gegenüber der Werkstückhauptebene bleibend unter dem Winkel gebogen wird.

2. Verfahren nach Anspruch 1, **dadurch gekennzeichnet, dass** jeweils eine Gewindekontur (5, 6) an zwei von der Verbindung (3) mit dem Restwerkstück (4) ausgehenden Seiten der Werkstücklasche (2) erstellt wird, indem an dem Werkstück in der Werkstückhauptebene zwei in Querrichtung voneinander beabstandete Schnitte jeweils mit dem Schnittverlauf einer Gewindekontur (5, 6) erstellt werden und dass die beidseits mit einer Gewindekontur (5, 6) versehene Werkstücklasche (2) zumindest mit einem beidseits eine Gewindekontur (5, 6) aufweisenden Teil als Gewindevorsprung gegenüber der Werkstückhauptebene bleibend unter dem Winkel gebogen wird.

3. Verfahren nach einem der vorhergehenden Ansprüche, **dadurch gekennzeichnet, dass** die an dem Werkstück mit gegenseitigem Abstand in Querrichtung erstellten Schnitte mit dem Schnittverlauf einer Gewindekontur (5, 6) mit einem eine Gewindesteigung erzeugenden gegenseitigen Versatz der Gewindekonturen (5, 6) in Längsrichtung erstellt werden.

4. Verfahren nach einem der vorhergehenden Ansprüche, **dadurch gekennzeichnet, dass** an dem Werkstück in der Werkstückhauptebene zumindest ein Schnitt mit dem Schnittverlauf einer Gewindekontur (5, 6) stanzend erstellt wird.

5. Verfahren nach einem der vorhergehenden Ansprüche, **dadurch gekennzeichnet, dass** an dem Werkstück in der Werkstückhauptebene zumindest ein Schnitt mit dem Schnittverlauf einer Gewindekontur (5, 6) durch thermisches Schneiden, insbesondere durch Laserschneiden, erstellt wird.

6. Verfahren nach einem der vorhergehenden Ansprüche, **dadurch gekennzeichnet, dass** die Werkstücklasche (2) durch Schwenkbiegen zumindest mit einem wenigstens eine Gewindekontur (5, 6) aufweisenden Teil als Gewindevorsprung gegenüber der Werkstückhauptebene bleibend unter dem Winkel gebogen wird.

7. Verfahren nach einem der vorhergehenden Ansprüche, **dadurch gekennzeichnet, dass** die Werkstücklasche (2) an dem Werkstück in der Werkstückhauptebene durch Erstellung eines Schnittes mit dem Schnittverlauf einer Gewindekontur (5, 6) an wenigstens einer von der Verbindung (3) mit dem Restwerkstück (4) ausgehenden Seite freigeschnitten wird.

8. Maschinelle Anordnung zur Erstellung eines an einem plattenartigen Werkstück, insbesondere an einem Blech (1), unter einem Winkel gegenüber der Werkstückhauptebene verlaufenden Gewindevorsprungs, umfassend eine Schneidvorrichtung zum Freischneiden von Werkstücklaschen (2), eine Gewindeschneidvorrichtung sowie eine Biegevorrichtung (15), wobei mittels der Schneidvorrichtung zum Freischneiden von Werkstücklaschen (2) an dem Werkstück eine Werkstücklasche (2) mit einseitiger Verbindung (3) mit dem Restwerkstück (4) freischneidbar und mittels der Gewindeschneidvorrichtung an wenigstens einer von der Verbindung (3) mit dem Restwerkstück (4) ausgehenden Seite der Werkstücklasche (2) eine Gewindekontur (5, 6) erstellbar ist und wobei mittels der Biegevorrichtung (15) die Werkstücklasche (2) zumindest mit einem Teil gegenüber der Werkstückhauptebene bleibend unter dem Winkel biegbar ist, **dadurch gekennzeichnet, dass** eine CNC-Steuerung (20) vorgesehen ist, mittels derer die Gewindeschneidvorrichtung derart gesteuert wird, dass mittels der Gewindeschneidvorrichtung an dem Werkstück in der Werkstückhauptebene zumindest ein Schnitt mit dem Schnittverlauf einer Gewindekontur (5, 6) erstellbar ist und mittels derer die Biegevorrichtung (15) derart gesteuert wird, dass mittels der Biegevorrichtung (15) die an wenigstens einer von der Verbindung (3) mit dem Restwerkstück (4) ausgehenden Seite mit einer Gewindekontur (5, 6) versehene Werkstücklasche (2) zumindest mit einem wenigstens eine Gewindekontur (5, 6) aufweisenden Teil als Gewindevorsprung gegenüber der Werkstückhauptebene bleibend unter dem Winkel biegbar ist.

9. Maschinelle Anordnung nach Anspruch 8, **dadurch gekennzeichnet, dass** mittels der CNC-Steuerung (20) die Gewindeschneidvorrichtung derart gesteuert wird, dass mittels der Gewindeschneidvorrichtung an dem Werkstück in der Werkstückhauptebene zwei in Querrichtung voneinander beabstandete Schnitte jeweils mit dem Schnittverlauf einer Gewindekontur (5, 6) erstellbar sind und dass mittels der CNC-Steuerung (20) die Biegevorrichtung (15) derart gesteuert wird, dass mittels der Biegevorrichtung (15) die beidseits mit einer Gewindekontur (5, 6) versehene Werkstücklasche (2) zumindest mit einem beidseits eine Gewindekontur (5, 6) aufweisenden Teil als Gewindevorsprung gegenüber der Werkstückhauptebene bleibend unter dem Winkel biegbar ist.

10. Maschinelle Anordnung nach Anspruch 8 oder 9, **dadurch gekennzeichnet, dass** mittels der CNC-Steuerung (20) die Gewindeschneidvorrichtung derart gesteuert wird, dass mittels der Gewindeschneidvorrichtung die an dem Werkstück einen gegenseitigen Abstand in Querrichtung aufweisenden Schnitte mit dem Schnittverlauf einer Gewindekontur (5, 6) mit einem eine Gewindesteigung erzeugenden gegenseitigen Versatz der Gewindekonturen (5, 6) in Längsrichtung erstellbar sind.

11. Maschinelle Anordnung nach einem der Ansprüche 8 bis 10, **dadurch gekennzeichnet, dass** als Gewindeschneidvorrichtung eine Stanzvorrichtung vorgesehen ist.

12. Maschinelle Anordnung nach einem der Ansprüche 8 bis 11, **dadurch gekennzeichnet, dass** als Gewindeschneidvorrichtung eine thermische Schneidvorrichtung, insbesondere eine Laserschneidvorrichtung (12), vorgesehen ist, wobei die thermische, gegebenenfalls die Laserschneidvorrichtung (12), einerseits und das Werkstück andererseits mittels der CNC-Steuerung (20) mit einer Bewegung parallel zu der Werkstückhauptebene relativ zueinander bewegbar sind.

13. Maschinelle Anordnung nach einem der Ansprüche 8 bis 11, **dadurch gekennzeichnet, dass** als Biegevorrichtung (15) eine Schwenkbiegevorrichtung vorgesehen ist.

14. Maschinelle Anordnung nach einem der Ansprüche 8 bis 13, **dadurch gekennzeichnet, dass** als Gewindeschneidvorrichtung die Schneidvorrichtung zum Freischneiden von Werkstücklaschen (2) vorgesehen ist, wobei mittels der CNC-Steuerung (20) diese Schneidvorrichtung derart gesteuert wird, dass mittels der Schneidvorrichtung die Werkstücklasche (2) an dem Werkstück in der Werkstückhauptebene vorzugsweise durch Erstellung eines Schnittes mit dem Schnittverlauf einer Gewindekontur (5, 6) an wenigstens einer von der Verbindung (3) mit dem Restwerkstück (4) ausgehenden Seite freischneidbar ist.

15. Maschinelle Anordnung nach einem der Ansprüche 8 bis 14, **dadurch gekennzeichnet, dass** eine Schneidstation (10), eine Biegestation (11) sowie eine Werkstücktransfervorrichtung (17) vorgesehen sind, wobei an der Schneidstation (10) eine Gewindeschneidvorrichtung und/oder eine Schneidvorrichtung zum Freischneiden von Werkstücklaschen (2) und an der Biegestation (11) eine Biegevorrichtung (15) vorgesehen sind und wobei mittels der CNC-Steuerung (20) die Werkstücktransfervorrichtung (17) derart gesteuert wird, dass das an der Schneidstation (10) bearbeitete Werkstück mittels der Werkstücktransfervorrichtung (17) zu der Biegestation (11) transportierbar ist.

## Claims

1. Method for producing a threaded projection extending on a plate-like workpiece, especially on a metal sheet (1), at an angle relative to the principal plane of the workpiece, wherein there is produced on the workpiece as the threaded projection a workpiece lug (2) which adjoins the remainder of the workpiece (4) by a connection (3) at one end, is provided with a thread contour (5, 6) on at least one side starting from the connection (3) to the remainder of the workpiece (4) and is permanently bent at the angle relative to the principal plane of the workpiece, at least by a portion having at least one thread contour (5, 6), **characterised in that** a thread contour (5, 6) is produced on at least one side of the workpiece lug (2) starting from the connection (3) to the remainder of the workpiece (4) by making in the workpiece in the principal plane of the workpiece at least one cut having the cut pattern of a thread contour (5, 6), and the workpiece lug (2) provided with a thread contour (5, 6) on at least one side starting from the connection (3) to the remainder of the workpiece (4) is permanently bent at the angle relative to the principal plane of the workpiece, at least by a portion having at least one thread contour (5, 6), to form the threaded projection.

2. Method according to claim 1, **characterised in that** a thread contour (5, 6) is produced on two sides of the workpiece lug (2) starting from the connection (3) to the remainder of the workpiece (4) by making in the workpiece in the principal plane of the workpiece two cuts spaced from each other in the transverse direction and each having the cut pattern of a thread contour (5, 6), and the workpiece lug (2) provided with a thread contour (5, 6) on both sides is permanently bent at the angle relative to the principal plane of the workpiece, at least by a portion having a thread contour (5, 6) on both sides, to form the threaded projection.

3. Method according to either of the preceding claims, **characterised in that** the cuts made in the workpiece in mutually spaced relationship in the transverse direction and having the cut pattern of a thread contour (5, 6) are made with a mutual offset of the thread contours (5, 6) in the longitudinal direction, producing a thread pitch.

4. Method according to any one of the preceding claims, **characterised in that** at least one cut having the cut pattern of a thread contour (5, 6) is made in the workpiece in the principal plane of the workpiece by punching.

5. Method according to any one of the preceding claims, **characterised in that** at least one cut having the cut pattern of a thread contour (5, 6) is made in the workpiece in the principal plane of the workpiece by thermal cutting, especially by laser cutting.

6. Method according to any one of the preceding claims, **characterised in that** the workpiece lug (2) is permanently bent at the angle relative to the principal plane of the workpiece, at least by a portion having at least one thread contour (5, 6), to form the threaded projection, by swing-folding.

7. Method according to any one of the preceding claims, **characterised in that** the workpiece lug (2) is cut free in the workpiece in the principal plane of the workpiece by making a cut having the cut pattern of a thread contour (5, 6) on at least one side starting from the connection (3) to the remainder of the workpiece (4).

8. Machine arrangement for making a threaded projection extending on a plate-like workpiece, especially on a metal sheet (1), at an angle relative to the principal plane of the workpiece, comprising a cutting device for cutting workpiece lugs (2) free, a thread-cutting device and a bending device (15), wherein a workpiece lug (2) having a connection (3) to the remainder of the workpiece (4) at one end can be cut free in the workpiece by means of the cutting device for cutting workpiece lugs (2) free, and a thread contour (5, 6) can be produced on at least one side of the workpiece lug (2) starting from the connection (3) to the remainder of the workpiece (4) by means of the thread-cutting device and wherein the workpiece lug (2) can be permanently bent at the angle relative to the principal plane of the workpiece, at least by a portion, by means of the bending device (15), **characterised in that** a CNC control (20) is provided by means of which the thread-cutting device is controlled in such a manner that at least one cut having the cut pattern of a thread contour (5, 6) can be made in the workpiece in the principal plane of the workpiece by means of the thread-cutting device, and by means of which CNC control (20) the bending device (15) is controlled in such a manner that the workpiece lug (2) provided with a thread contour (5, 6) on at least one side starting from the connection (3) to the remainder of the workpiece (4) can be permanently bent at the angle relative to the principal plane of the workpiece, at least by a portion having at least one thread contour (5, 6), to form the threaded projection, by means of the bending device (15).

9. Machine arrangement according to claim 8, **characterised in that** by means of the CNC control (20) the thread-cutting device is controlled in such a manner that two cuts spaced from each other in the transverse direction and each having the cut pattern of a thread contour (5, 6) can be made in the workpiece in the principal plane of the workpiece by means of the thread-cutting device, and that by means of the CNC control (20) the bending device (15) is controlled in such a manner that the workpiece lug (2) provided with a thread contour (5, 6) on both sides can be permanently bent at the angle relative to the principal plane of the workpiece, at least by a portion having a thread contour (5, 6) on both sides, to form the threaded projection, by means of the bending device (15).

10. Machine arrangement according to claim 8 or 9, **characterised in that** by means of the CNC control (20) the thread-cutting device is controlled in such a manner that the cuts made in the workpiece in mutually spaced relationship in the transverse direction and having the cut pattern of a thread contour (5, 6) can be made by means of the thread-cutting device with a mutual offset of the thread contours (5, 6) in the longitudinal direction, producing a thread pitch.

11. Machine arrangement according to any one of claims 8 to 10, **characterised in that** a punching device is provided as the thread-cutting device.

12. Machine arrangement according to any one of claims 8 to 11, **characterised in that** a thermal cutting device, especially a laser cutting device (12), is provided as the thread-cutting device, wherein the thermal cutting device, where applicable the laser cutting device (12), on the one hand, and the workpiece, on the other hand, are movable relative to each other by means of the CNC control (20) with a movement parallel to the principal plane of the workpiece.

13. Machine arrangement according to any one of claims 8 to 11, **characterised in that** a swing-folding device is provided as the bending device (15).

14. Machine arrangement according to any one of claims 8 to 13, **characterised in that** the cutting device for cutting workpiece lugs (2) free is provided as the thread-cutting device, wherein by means of the CNC control (20) that cutting device is controlled in such a manner that by means of the cutting device the workpiece lug (2) can be cut free in the workpiece in the principal plane of the workpiece preferably by making a cut having the cut pattern of a thread contour (5, 6) on at least one side starting from the connection (3) to the remainder of the workpiece (4).

15. Machine arrangement according to any one of claims 8 to 14, **characterised in that** a cutting station (10), a bending station (11) and a workpiece transfer device (17) are provided, wherein a thread-cutting device and/or a cutting device for cutting workpiece lugs (2) free are/is provided at the cutting station (10), and a bending device (15) is provided at the bending station (11) and wherein by means of the CNC control (20) the workpiece transfer device (17) is controlled in such a manner that the workpiece processed at the cutting station (10) can be transported by means of the workpiece transfer device (17) to the bending station (11).

## Revendications

1. Procédé pour produire une protubérance filetée dans un élément en forme de plaque, en particulier une tôle (1), s'étendant selon un angle par rapport au plan principal de l'élément, sachant que sur l'élément est réalisée comme protubérance filetée, une attache d'élément (2) se raccordant avec une liaison unilatérale (3) à l'élément restant (4), munie d'un contour de filetage (5, 6) sur au moins un côté partant de la liaison (3) à l'élément restant (4) et pliée de manière permanente selon l'angle par rapport au plan principal de l'élément au moins avec une partie présentant au moins un contour de filetage (5, 6), **caractérisé en ce qu'**un contour de filetage (5, 6) est réalisé sur au moins une face de l'attache d'élément (2) partant de la liaison (3) à l'élément restant (4) en réalisant sur l'élément dans le plan principal de l'élément au moins une découpe avec le parcours de découpe d'un contour de filetage (5, 6) et **en ce que** l'attache d'élément (2) munie d'un contour de filetage (5, 6) sur au moins un côté partant de la liaison (3) à l'élément restant (4) est pliée de manière permanente selon l'angle par rapport au plan principal de l'élément, au moins avec une partie présentant au moins un contour de filetage (5, 6) comme protubérance filetée.

2. Procédé selon la revendication 1, **caractérisé en ce qu'**est réalisé respectivement un contour de filetage (5, 6) sur deux côtés partant de la liaison (3) à l'élément restant (4) de l'attache d'élément (2), en réalisant sur l'élément dans le plan principal de l'élément deux découpes situées à distance l'une de l'autre en direction transversale avec respectivement le parcours de découpe d'un contour de filetage (5, 6) et **en ce que** l'attache d'élément (2) munie des deux côtés d'un contour de filetage (5, 6) est pliée de manière permanente selon l'angle par rapport au plan principal de l'élément, au moins avec une partie présentant des deux côtés un contour de filetage (5, 6) comme protubérance filetée.

3. Procédé selon l'une quelconque des revendications précédentes, **caractérisé en ce que** les découpes réalisées sur l'élément avec une distance réciproque en direction transversale avec le parcours de découpe d'un contour de filetage (5, 6), sont réalisées avec un décalage réciproque des contours de filetage en direction longitudinale (5, 6) produisant un pas de filetage.

4. Procédé selon l'une quelconque des revendications précédentes, **caractérisé en ce qu'**est réalisée par poinçonnage, sur l'élément, dans le plan principal de l'élément, au moins une découpe avec le parcours de découpe d'un contour de filetage (5, 6).

5. Procédé selon l'une quelconque des revendications précédentes, **caractérisé en ce qu'**est réalisée sur l'élément, dans le plan principal de l'élément, au moins une découpe avec le parcours de découpe d'un contour de filetage (5, 6) par découpe thermique, en particulier par découpe laser.

6. Procédé selon l'une quelconque des revendications précédentes, **caractérisé en ce que** l'attache d'élément (2) est pliée de manière permanente selon l'angle par rapport au plan principal de l'élément, par pliage pivotant au moins avec une partie présentant au moins un contour de filetage (5, 6) comme protubérance filetée.

7. Procédé selon l'une quelconque des revendications précédentes, **caractérisé en ce que** l'attache d'élément (2) est découpée de l'élément dans le plan principal de l'élément par réalisation d'une découpe avec le parcours de découpe d'un contour de filetage (5, 6) sur au moins un côté partant de la liaison (3) à l'élément restant (4).

8. Agencement de machine pour réaliser une protubérance filetée dans un élément en forme de plaque, en particulier une tôle (1), s'étendant selon un angle par rapport au plan principal de l'élément, comprenant un dispositif de découpe pour la découpe d'attaches d'élément (2), un dispositif de filetage ainsi qu'un dispositif de pliage (15), sachant qu'au moyen du dispositif de découpe pour la découpe d'attaches d'élément (2) sur l'élément, une attache d'élément (2) avec une liaison unilatérale (3) à l'élément restant (4) peut être découpée et qu'au moyen du dispositif de filetage sur au moins un côté de l'attache d'élément (2) partant de la liaison (3) à l'élément restant (4), un contour de filetage (5, 6) peut être réalisé et sachant qu'au moyen du dispositif de pliage (15), l'attache d'élément (2) peut être pliée de manière permanente par rapport au plan principal de l'élément au moins avec une partie, **caractérisé en ce qu'**une commande CNC (20) est prévue, au moyen de laquelle le dispositif de filetage est commandé de façon à ce qu'au moyen du dispositif de filetage peut être réalisée sur l'élément dans le plan principal de l'élément au moins une découpe avec le parcours de découpe d'un contour de filetage (5, 6) et au moyen de laquelle le dispositif de pliage (15) est commandé de façon à ce qu'au moyen du dispositif de pliage (15), l'attache d'élément (2) munie d'un contour de filetage (5, 6) sur au moins un côté partant de la liaison (3) à l'élément restant (4) peut être pliée de manière permanente selon l'angle par rapport au plan principal de l'élément, au moins avec une partie présentant au moins un contour de filetage (5, 6) comme protubérance filetée.

9. Agencement de machine selon la revendication 8, **caractérisé en ce qu'**au moyen de la commande CNC (20), le dispositif de filetage est commandé de façon à ce qu'au moyen du dispositif de filetage peuvent être réalisées sur l'élément, dans le plan principal de l'élément deux découpes maintenues à distance l'une de l'autre en direction transversale avec respectivement le parcours de découpe d'un contour de filetage (5, 6) et qu'au moyen de la commande CNC (20), le dispositif de pliage (15) est commandé de façon à ce qu'au moyen du dispositif de pliage (15), l'attache d'élément (2) munie des deux côtés d'un contour de filetage (5, 6) peut être pliée de manière permanente selon l'angle par rapport au plan principal de l'élément, au moins avec une partie présentant des deux côtés un contour de filetage (5, 6) comme protubérance filetée.

10. Agencement de machine selon la revendication 8 ou 9, **caractérisé en ce qu'**au moyen de la commande CNC (20), le dispositif de filetage est commandé de façon à ce qu'au moyen du dispositif de filetage, les découpes réalisées sur l'élément avec une distance réciproque en direction transversale avec le parcours de découpe d'un contour de filetage (5, 6) peuvent être réalisées avec un décalage réciproque des contours de filetage (5, 6) en direction longitudinale, produisant un pas de filetage.

11. Agencement de machine selon l'une quelconque des revendications 8 à 10, **caractérisé en ce que** comme dispositif de filetage est prévu un dispositif de poinçonnage.

12. Agencement de machine selon l'une quelconque des revendications 8 à 11, **caractérisé en ce que** comme dispositif de filetage est prévu un dispositif de découpe thermique, en particulier un dispositif de découpe laser (12), sachant que le dispositif de découpe thermique, éventuellement le dispositif de découpe laser (12), d'une part, et l'élément d'autre part peuvent être déplacés l'un par rapport à l'autre au moyen de la commande CNC (20) avec un mouvement parallèle au plan principal de l'élément.

13. Agencement de machine selon l'une quelconque des revendications 8 à 11, **caractérisé en ce que** comme dispositif de pliage (15) est prévu un dispositif de pliage pivotant.

14. Agencement de machine selon l'une quelconque des revendications 8 à 13, **caractérisé en ce que** comme dispositif de filetage est prévu le dispositif de découpe pour la découpe d'attaches d'élément (2), sachant que ce dispositif de découpe est commandé au moyen de la commande CNC (20) de façon à ce qu'au moyen du dispositif de découpe, l'attache d'élément (2) peut être découpée de l'élément dans le plan principal de l'élément de préférence en réalisant une découpe avec le parcours de découpe d'un contour de filetage (5, 6) sur au moins un côté partant de la liaison (3) à l'élément restant (4).

15. Agencement de machine selon l'une quelconque des revendications 8 à 14, **caractérisé en ce qu'**une station de découpe (10), une station de pliage (11) ainsi qu'un dispositif de transfert d'élément (17) sont prévus, sachant que sur la station de découpe (10) sont prévus un dispositif de filetage et/ou un dispositif de découpe pour la découpe d'attaches d'élément (2) et que sur la station de pliage (11) est prévu un dispositif de pliage (15) et sachant qu'au moyen de la commande CNC (20) le dispositif de transfert d'élément (17) est commandé de façon à ce que l'élément usiné sur la station de découpe (10) peut être transporté au moyen du dispositif de transfert d'élément (17) vers la station de pliage (11).
